# FASCICULE DE BREVET EUROPEEN

(11) **EP 3 812 271 B1**
(45) Date de publication et mention de la délivrance du brevet: **27.09.2023**
(21) Numéro de dépôt: 20186917.9
(22) Date de dépôt: 21.07.2020
(51) Int. Cl.: B64U 70/20, B64D 1/22, B64D 5/00, B64D 1/12, B64U 10/13

(54) **SYSTEME DE RECUPERATION D'UN AERONEF A PORTER**
SYSTEM ZUR WIEDERHERSTELLUNG EINES ZU TRAGENDEN LUFTFAHRZEUGS
SYSTEM FOR RECOVERING A CARRIER-BORNE AIRCRAFT

(30) Priorité: 21.10.2019 FR 1911767
(43) Date de publication de la demande: 28.04.2021
(73) Titulaire: Airbus Helicopters, 13725 Marignane Cedex (FR)
(72) Inventeur: THOMASSEY, Lionel, 13270 FOS SUR MER (FR)
(74) Mandataire: GPI Brevets

(56) Documents cités:
- CN-A- 108 945 531
- FR-A1- 2 974 786
- US-A- 3 249 322
- US-B1- 9 448 562
- Anonymous: "Soyuz 7K-OK variant", , 27 December 2017 (2017-12-27), XP055918520, From: http://www.russianspaceweb.com/soyuz-7k-ok .html Retrieved from the Internet: URL:https://web.archive.org/web/2017122718 1411/http://www.russianspaceweb.com/images /spacecraft/manned/soyuz/7k_ok/design/7k-o k_info_silo_1.jpg [retrieved on 2022-05-05]

## Description

La présente invention concerne un système de récupération voire de largage pour porter un aéronef avec un autre aéronef. L'invention se situe donc dans le domaine technique des aéronefs.

Parmi les aéronefs, les hélicoptères ou équivalents possèdent une grande autonomie mais sont volumineux, onéreux et soumis à des contraintes de navigation visant à assurer la sécurité de leurs occupants. De plus, un hélicoptère ne peut pas évoluer dans certains espaces aériens pour préserver la sécurité de ces occupants, par exemple lorsque le relief est susceptible de conduire à un accident voire lorsque l'atmosphère est contaminée notamment par des éléments chimiquement dangereux, des bactéries ou encore des éléments radioactifs suite à un incident.

Par ailleurs, les drones sont des aéronefs sans pilote embarqué possédant une autonomie restreinte. Néanmoins, certains drones présentent un encombrement restreint leur permettant d'évoluer à proximité de reliefs dangereux. Les drones peuvent être pilotés par un pilote humain à distance ou par un pilote automatique embarqué ou distant par exemple pour évoluer dans un environnement pollué dangereux pour l'homme.

Ces deux types d'aéronefs peuvent être complémentaires.

En effet, un aéronef dénommé par commodité « aéronef porteur » peut porter en vol un autre aéronef dénommé par commodité « aéronef à porter ». Par exemple un hélicoptère peut être équipé d'un drone largable et/ou récupérable en vol. Pour diverses missions, le drone peut être le prolongement de l'aéronef porteur. Selon un exemple, un hélicoptère peut couvrir une distance relativement longue pour acheminer un drone au plus près d'une zone à explorer où s'est produit un accident. Cette zone peut être éventuellement inaccessible pour l'hélicoptère pour des raisons de sécurité des personnes embarquées dans cet hélicoptère, des questions d'accessibilité,.... A destination, le drone est alors largué pour explorer la zone de manière sécurisée puis est éventuellement récupéré par l'hélicoptère.

En larguant un drone depuis un hélicoptère, on s'affranchit donc des limitations liées à la faible autonomie de ce drone.

En outre, la récupération du drone avec l'hélicoptère peut être intéressante, par exemple pour le ravitailler en carburant ou en énergie électrique avec rechargement à bord au cours de la mission, voire pour récupérer du matériel transporté par ce drone.

Cependant, une telle récupération peut être délicate. En particulier, le contrôle du drone dans un environnement perturbé par le souffle du rotor de sustentation d'un hélicoptère est difficile. En effet, le rotor principal de sustentation d'un hélicoptère est traversé par un flux d'air, ce flux d'air perturbant les conditions de vol à l'intérieur d'un volume survolé par l'hélicoptère. En complément, plus un drone est léger, plus sa trajectoire de vol est incertaine dans un tel volume perturbé par le flux d'air traversant le rotor de sustentation de l'hélicoptère.

Outre les conditions de vol difficiles que l'on peut rencontrer à proximité d'un hélicoptère, munir un drone d'un dispositif de pilotage précis pour faciliter sa récupération en vol peut s'avérer onéreux. De plus, un tel dispositif de pilotage peut être encombrant et posséder une masse non négligeable.

Parmi l'état de la technique, on connaît des dispositifs pour lancer un aéronef à partir d'une plateforme mobile.

Par exemple, le document WO2008/089432 montre un aéronef larguant un drone accroché à un parachute. Après largage, le parachute se détache du drone et le drone devient autonome.

Par ailleurs, il existe des dispositifs mettant en oeuvre des crochets d'ancrage ou de simples filets pour récupérer des drones en vol.

De même, on connaît des méthodes d'approche positionnant un drone à l'aplomb d'une zone d'atterrissage. On peut par exemple se référer au document EP 1 645 505.

Par ailleurs, l'état de la technique inclut aussi les documents EP2103518A2, US2006/249623A1, FR2941922A1, US3389880A, DE3206299A1, US 3249322 A, CN 108 945 531 A, US 9448562 B1 et US4753400A.

Le document US 3249322 décrit un système pour lier deux avions. Ce système comporte un organe récepteur disposé au bout d'une aile d'un premier avion. Cet organe récepteur est configuré pour coopérer avec un dôme et une tige disposés au bout d'une aile d'un autre avion.

Le document CN 108 945 531 A décrit un système de récupération d'un satellite.

En outre, le document FR 2974786 décrit un dispositif de largage et de récupération d'un drone apte à être fixé à un aéronef. Ce dispositif comporte un moyen d'accueil d'un drone, ce moyen d'accueil étant pourvu d'un moyen de solidarisation/désolidarisation du drone, le moyen d'accueil étant solidaire d'un moyen de guidage évasé pour guider le drone vers le moyen d'accueil.

La présente invention a alors pour objet de proposer un système de récupération voire de largage d'un drone, simple à mettre en oeuvre, et par exemple applicable sur un aéronef de type hélicoptère.

L'invention vise un système de récupération pour au moins récupérer, voire larguer, en vol un aéronef à porter à partir d'un aéronef porteur, le système de récupération comprenant un récepteur apte à être porté par l'aéronef porteur et un accrocheur apte à être porté par l'aéronef à porter, ledit récepteur présentant un volume interne débouchant sur un milieu extérieur par une surface de passage, ledit récepteur comportant un tronçon de guidage creux, ledit tronçon de guidage étant évasé.

Par exemple, l'aéronef à porter est un aéronef sans pilote embarqué. Selon un exemple, l'aéronef porteur est un aéronef apte voler à « basse vitesse » et par exemple à moins de 50 noeuds et/ou comportant une voilure tournante. L'aéronef porteur peut être un aéronef muni d'au moins un pilote humain et/ou automatique.

Le système peut éventuellement comprendre une ou plusieurs des caractéristiques qui suivent.

Selon un aspect, l'accrocheur peut comporter un tronçon de connexion évasé apte à être contenu au moins partiellement dans ledit volume interne, le système de récupération comprenant un dispositif de fixation fixant de manière réversible l'accrocheur au récepteur, par exemple dans des conditions prédéterminées. De telles conditions prédéterminées peuvent comporter une position prédéterminée ou une enveloppe prédéterminée de positions de l'accrocheur par rapport au récepteur.

Eventuellement, ledit tronçon de connexion voire l'accrocheur sont inscrits dans un volume d'accrochage apte à être contenu intégralement dans le volume interne du récepteur de part leurs volumes et leurs formes.

Selon un aspect, le récepteur peut être accroché à l'aéronef porteur. A cet effet, le récepteur peut comprendre une fixation arrangée par exemple en dehors du volume interne du récepteur. Cette fixation peut être fixée à l'aéronef porteur. En particulier, le récepteur peut être attaché à un câble qui est attaché à une potence ou encore à un treuil... Le cas échéant les interfaces treuils usuelles peuvent être conservées afin de laisser toute sa polyvalence de mission à l'aéronef porteur. Dans ce cas de figure, le récepteur peut représenter un lest visant à maintenir le câble sensiblement tendu pour par exemple éviter un mouvement de remontée du câble vers l'aéronef porteur suite à un largage.

Par ailleurs, le récepteur et l'accrocheur peuvent présenter chacun un tronçon ayant une forme évasée. Cette forme permet d'optimiser la captation de l'accrocheur par le récepteur sous de nombreuses conditions de vol. En particulier, le récepteur peut capter un accrocheur d'un drone durant une phase de vol stationnaire de l'aéronef porteur mais aussi durant un vol d'avancement. Eventuellement, la récupération d'un drone est réalisée durant un vol de translation de l'aéronef porteur pour éviter qu'un câble portant le récepteur ballote. L'assiette de l'aéronef à porter muni de l'accrocheur peut être pilotée pour être sensiblement parallèle à la surface de passage.

Selon un exemple, le tronçon de connexion et le tronçon de guidage ont chacun une forme qui s'évase sensiblement selon une direction allant de l'aéronef vers le sol et par exemple conique ou tronconique, la forme du tronçon de connexion étant plus petite que la forme du tronçon de guidage.

Selon un aspect, le récepteur peut comporter au moins un orifice traversant de part en part une paroi de ce récepteur, cet orifice mettant en communication fluidique ledit milieu extérieur et ledit volume interne.

Un tel orifice peut notamment permettre à l'air extérieur de s'écouler du milieu extérieur vers le volume interne afin de stabiliser le récepteur en vol.

Le tronçon de guidage est asymétrique.

Le tronçon de guidage a une forme asymétrique notamment dépourvue d'une symétrie de révolution contrairement à une forme strictement conique ou tronconique pour prendre en considération un basculement du récepteur lors d'un vol d'avancement. Une forme asymétrique peut tendre à limiter les risques de ballotement du récepteur lors d'un vol d'avancement.

Alternativement, dans un exemple qui n'entre pas dans le champ d'application des revendications annexées, le tronçon de guidage peut présenter une symétrie de révolution. Le système de récupération peut être dimensionné pour autoriser une dérive prédéterminée du récepteur en vol d'avancement qui force le câble éventuel et le récepteur à suivre une trajectoire « propre », à savoir avec un déplacement en rotation selon l'axe du câble du treuil éventuel restreint à quelques degrés et/ou avec un ballottement latéral ou avant-arrière réduit à quelques degrés.

Selon un aspect, le récepteur peut comporter une portion de centrage solidaire d'un sommet de réception du tronçon de guidage, ledit accrocheur comportant un doigt de centrage éventuellement solidaire d'un sommet de connexion dudit tronçon de connexion, le doigt de centrage étant configuré pour pénétrer dans ladite portion de centrage.

L'accrocheur comporte donc un doigt de centrage d'une forme sensiblement complémentaire à la portion de centrage. Dès lors, l'accrocheur peut se déplacer, voire glisser, dans le tronçon de guidage jusqu'à ce que le doigt de centrage prenne sa place dans la portion de centrage. Lorsque le doigt de centrage est disposé dans la portion de centrage, l'accrocheur est correctement positionné au sein du récepteur au moins horizontalement.

Selon un exemple, la portion de centrage comporte un anneau.

Selon un exemple, le récepteur peut posséder une portion de centrage en forme de cloche qui surmonte le tronçon de guidage, la cloche délimitant partiellement le volume interne. Par exemple, le volume interne peut être décomposé en un volume inférieur délimité par le tronçon de guidage et un volume supérieur délimité par la cloche. La cloche permet éventuellement de positionner l'accrocheur horizontalement via les bords de cette cloche voire verticalement via le fond de la cloche.

Selon un aspect, ledit accrocheur peut être solidaire d'un mât configuré pour être attaché à l'aéronef à porter, ledit mât comprenant un segment agencé en dehors dudit récepteur lorsque ledit accrocheur est arrimé au récepteur.

Le mât permet d'éloigner l'aéronef à porter du récepteur pour éviter tout contact entre cet aéronef à porter et le récepteur.

Par exemple, le mât s'étend selon une direction d'extension sur une longueur de mât supérieure à une hauteur du récepteur selon ladite direction d'extension. Le cas échéant, la direction d'extension peut représenter un axe de symétrie de révolution d'une portion de centrage du récepteur.

Selon un aspect, au moins ledit accrocheur ou ledit récepteur peut comporter au moins un organe tampon configuré pour limiter les conséquences d'un contact entre l'accrocheur et le récepteur. Autrement dit, l'accrocheur et/ou le récepteur peuvent comporter au moins un organe tampon.

Par exemple, l'organe tampon peut comprendre un bloc en une matière élastique, de l'élastomère par exemple. L'organe tampon peut être fixé à une face interne du récepteur délimitant le volume interne ou à une face externe de l'accrocheur.

Selon un aspect, ledit dispositif de fixation peut comporter au moins une zone d'aimantation solidaire de l'accrocheur ou du récepteur, ledit dispositif de fixation ayant au moins un aimant réversible solidaire de l'accrocheur ou du récepteur dépourvu de la zone d'aimantation, ledit au moins un aimant réversible étant apte à être aimanté ou pas aimanté à ladite au moins une zone d'aimantation sur commande.

Par exemple, le récepteur peut donc avoir une zone d'aimantation pouvant être aimantée à au moins un aimant réversible de l'accrocheur pour fixer cet accrocheur au récepteur sur ordre d'un organe de commande.

La commande d'au moins certains aimants réversibles peut se faire manuellement au travers d'un opérateur présent au sol ou embarqué à bord de l'aéronef porteur, par exemple, mais aussi peut être émise en totale autonomie par un calculateur éventuellement suite à une détection de position par un système de positionnement.

Un organe tampon peut notamment être intéressant en cas d'utilisation d'aimants réversibles générant des champs magnétiques importants capables de rapprocher violemment l'accrocheur du récepteur.

Par exemple, cet au moins un aimant réversible peut comporter au moins un aimant normalement ouvert qui est aimantable à la zone d'aimantation hors cas de panne électrique, ledit au moins un aimant réversible comportant au moins un aimant normalement fermé qui est aimantable à la zone d'aimantation par un module électriquement autonome en cas de détection d'une panne électrique, ledit au moins un aimant réversible normalement ouvert ne coopérant pas avec ledit module.

Le terme « aimantable » qualifie par la suite un aimant réversible générant un champ magnétique dans une direction permettant d'aimanter cet aimant réversible à la zone d'aimantation.

Chaque aimant réversible peur par exemple comprendre un système à électroaimant générant un champ magnétique à orientation variable. Ainsi, un tel aimant réversible peut être aimantable ou non aimantable à la zone d'aimantation en fonction de l'orientation du champ magnétique qu'il génère.

Par exemple, chaque aimant réversible peut comprendre un système connu sous la dénomination commerciale « OpenGrab EPM V3 R5C » et commercialisé par « nicadrone ».

Avec une architecture de ce type, même en cas de panne électrique d'un réseau électrique principal, au moins un aimant réversible peut être aimanté lors d'une phase d'arrimage de l'accrocheur au récepteur.

Une source électrique d'un tel réseau peut alimenter électriquement directement ou indirectement chaque aimant réversible normalement ouvert. Cette source électrique peut permettre dans des conditions normales d'aimanter si besoin les aimants normalement ouverts afin de solidariser un accrocheur à un récepteur. La source d'énergie électrique peut comprendre au moins une source électrique de l'aéronef à porter lorsque les aimants réversibles sont sur l'accrocheur. La source d'énergie électrique peut comprendre une pile, une batterie, un générateur électrique...

Le module relié aux aimants normalement fermés peut comporter sa propre réserve d'énergie électrique, telle qu'une pile, une batterie, un générateur électrique

Eventuellement, le système de récupération peut comporter au moins un interrupteur pour inhiber ledit au moins un aimant normalement fermé et/ou ledit au moins un aimant normalement ouvert. Le terme « inhiber » signifie que l'aimant réversible inhibé ne produit pas un champ magnétique permettant de l'aimanter à la zone d'aimantation.

L'interrupteur peut être soit commandé par un calculateur de l'aéronef à porter en fonction d'une loi mémorisée ou d'un équivalent soit commandé par un pilote non embarqué par exemple. Par exemple, un interrupteur peut couper une ligne électrique débouchant sur un aimant réversible ou peut générer un ordre transmis audit module.

Durant le vol de l'aéronef à porter, chaque interrupteur peut ainsi être activé pour inhiber les aimants réversibles. Par conséquent, les aimants normalement ouverts et normalement fermés sont par exemple réglés pour générer chacun un champ magnétique qui ne permet pas de l'aimanter à la zone d'aimantation, indépendamment de la position de l'accrocheur par rapport au récepteur.

Durant une phase d'arrimage, chaque interrupteur peut être sollicité pour activer le système d'aimantation.

Lorsque l'accrocheur peut être arrimé au récepteur, les aimants normalement ouverts sont commandés pour modifier l'orientation de leurs champs magnétiques afin de pouvoir être fixés à la zone d'aimantation. A l'inverse, les aimants normalement fermés ne reçoivent aucun ordre et restent non aimantables à la zone d'aimantation.

En cas de panne électrique du réseau reliant la source d'énergie électrique aux aimants normalement ouverts, les aimants normalement ouverts restent le cas échéant aimantables à la zone d'aimantation. Par contre, le module peut détecter une telle panne par exemple en détectant l'absence d'un courant électrique à ses bornes. Le module étant indépendant électriquement, ce module commande les aimants normalement fermés pour les rendre aimantables à la zone d'aimantation. Par exemple, le module transmet un signal électrique à chaque aimant normalement fermé à cet effet.

De manière complémentaire ou alternative, le dispositif de fixation peut comporter au moins un doigt de blocage mobile par rapport au tronçon de guidage, ledit doigt de blocage étant mobile entre une position libre dans laquelle le doigt de blocage n'entrave pas l'accrocheur et une position de blocage dans laquelle ledit accrocheur est maintenu au moins par le doigt de blocage.

Le ou les doigts de blocage sont portés par le récepteur. Par exemple, le ou les doigts de blocage sont portés chacun articulés à un soutien du récepteur par une liaison, et par exemple par une liaison pivot.

L'expression « doigt de blocage » désigne un organe apte à bloquer l'accrocheur par exemple par interférence de forme. Par exemple, un doigt de blocage peut prendre la forme d'un bras apte à s'arc-bouter ou d'un crochet apte à s'insérer dans une gorge ou un équivalent.

Eventuellement, le tronçon de guidage peut comporter une découpe par doigt de blocage, chaque doigt de blocage traversant la découpe au moins dans la position de blocage dans laquelle le doigt de blocage coince l'accrocheur. Une telle découpe peut prendre la forme d'un orifice précité.

Chaque doigt de blocage peut coopérer avec le récepteur pour former une pince afin de réaliser un arrêt positif entre le récepteur et l'accrocheur.

Chaque doigt de blocage peut être motorisé ou encore commandé mécaniquement par l'accrocheur en tant que tel.

Par exemple, le doigt de blocage peut être commandé mécaniquement par l'accrocheur au moins pour passer de la position libre à la position de blocage, ledit doigt de blocage étant relié à un piston mobile en translation pour qu'une translation du piston induite par l'accrocheur engendre une rotation du doigt de blocage.

Un exemple de dispositif de fixation comporte ainsi un piston poussé par l'accrocheur. Ce piston peut être relié mécaniquement à au moins un doigt de blocage afin de basculer directement ou indirectement ce doigt de blocage. La translation du piston induit le passage de chaque doigt de blocage au travers du récepteur et notamment du tronçon de guidage pour verrouiller l'accrocheur au récepteur. Eventuellement, lorsque ce dispositif est associé à des organes aimantables, ce dispositif peut être dimensionné pour pincer l'accrocheur après la mise en oeuvre des organes aimantables. Pour permettre le largage suivant de l'aéronef à porter, les doigts de blocage peuvent être déverrouillés par un opérateur humain présent dans l'aéronef porteur, et/ou par des actionneurs et éventuellement les mêmes actionneurs qui ont permis de placer les doigts de blocage dans la position de blocage et/ou suite à une action de l'aéronef à porter.

Selon un autre exemple, un doigt de blocage peut prendre la forme d'un crochet mobile par exemple en rotation pour s'insérer dans une gorge du doigt de centrage afin de bloquer verticalement et / ou horizontalement l'accrocheur. Un tel crochet peut être commandé par un moteur ou mécaniquement sans moteur et par exemple par l'accrocheur.

Selon un aspect, ledit système de récupération peut comporter au moins un dispositif de positionnement générant un signal qui varie en fonction d'une position relative de l'accrocheur par rapport au récepteur.

Un tel dispositif de positionnement peut fournir une aide, pour piloter l'aéronef à porter, à un pilote humain déporté ou à un pilote automatique de l'aéronef à porter. Le dispositif de positionnement peut aussi commander le système de fixation dès que l'accrocheur est correctement positionné. Par exemple, un calculateur de positionnement peut à partir d'une certaine distance commander une aimantation progressive ou sensiblement instantanée des aimants réversibles précités.

Par exemple, le récepteur et/ou l'accrocheur peuvent posséder des zones réservées pour intégrer divers capteurs du dispositif de positionnement.

Selon un aspect, le dispositif de positionnement peut comporter au moins une caméra et/ou au moins un calculateur de positionnement et/ou au moins une cible portée par le récepteur.

Selon un aspect, le dispositif de positionnement peut comporter une caméra portée par l'accrocheur ainsi qu'un calculateur de positionnement relié à ladite caméra et au moins une cible portée par le récepteur.

La caméra peut être par exemple agencée le cas échéant sur le doigt de centrage de l'accrocheur.

Le calculateur de positionnement peut appliquer des algorithmes connus pour déterminer la position de l'accrocheur par rapport au récepteur à l'aide d'images de la cible saisies par la caméra. Par exemple, un algorithme connu sous l'expression anglaise « vision computing » avec OPEN CV ou encore un réseau de neurones de type connu sous l'expression « Deep learning » peuvent être utilisés pour reconnaitre la présence de l'accrocheur et déclencher l'ordre de verrouillage. Par exemple, la cible peut comprendre au moins un symbole géométrique et éventuellement au moins un cercle, le calculateur de positionnement déterminant la position de l'accrocheur en fonction de la forme du symbole capté avec la caméra au regard du cercle théoriquement observé lorsque l'accrocheur est correctement positionné. La littérature détaille un tel procédé.

Selon un autre aspect, le récepteur peut comprendre une caméra évaluant la position de l'accrocheur. Par exemple, un calculateur de positionnement exploite les images transmises pas la caméra pour déterminer si un doigt de centrage de l'accrocheur est passé au travers d'un orifice de centrage du récepteur et commander en conséquence le déplacement de chaque doigt de blocage. Des algorithmes de type « computer vision » ou « deep learning » sont envisageables par exemple.

De manière alternative ou complémentaire, le dispositif de positionnement peut comporter un capteur de proximité. Un tel capteur de proximité peut par exemple comprendre un système à ultrasons, un capteur à effet hall, un bouton poussoir...

Selon un autre aspect, le récepteur et/ou l'accrocheur et/ou l'aéronef à porter peut comprendre une ou plusieurs centrales inertielles

Selon un aspect, un dispositif de positionnement peut le cas échéant être relié à l'interrupteur commandant des aimants réversibles.

Outre un système de récupération, l'invention vise un ensemble muni d'un aéronef porteur et d'un aéronef à porter, le récepteur étant accroché à l'aéronef porteur et l'accrocheur étant accroché à l'aéronef à porter.

L'invention et ses avantages apparaîtront avec plus de détails dans le cadre de la description qui suit avec des exemples donnés à titre illustratif en référence aux figures annexées qui représentent :
[Fig 1] la figure 1, un schéma illustrant un ensemble comprenant un aéronef à porter et un aéronef porteur,
[Fig 2] la figure 2, selon un exemple qui n'entre pas dans le champ d'application des revendications annexées, une vue d'un tronçon de guidage symétrique,
[Fig 3] la figure 3, une vue d'un tronçon de guidage asymétrique,
[Fig 4] la figure 4, une vue d'un tronçon de guidage muni d'orifices,
[Fig 5] la figure 5, une vue d'un tronçon de guidage muni d'une zone d'aimantation et d'un tronçon de connexion muni d'aimants réversibles,
[Fig 6] la figure 6, une vue illustrant l'entrée d'un accrocheur dans un récepteur,
[Fig 7] la figure 7, une vue d'un récepteur comprenant des doigts de blocage formant des pinces,
[Fig 8] la figure 8, une vue d'un récepteur comprenant quatre doigts de blocage,
[Fig 9] la figure 9, une vue d'un récepteur comprenant un doigt de blocage de type crochet,
[Fig 10] la figure 10, une vue d'un dispositif de positionnement,
[Fig 11] la figure 11, une vue de cibles comprenant des symboles géométriques d'un dispositif de positionnement,
[Fig 12] la figure 12, un schéma illustrant une architecture d'un aéronef à porter muni d'un dispositif de positionnement,
[Fig 13] la figure 13, un schéma illustrant une zone dans laquelle un aéronef à porter de type drone est sensé évolué et être récupéré, et
[Fig 14] la figure 14, un schéma illustrant diverses trajectoires susceptibles d'être suivies lors de la récupération d'un aéronef à porter de type drone.

Les éléments présents dans plusieurs figures distinctes sont affectés d'une seule et même référence.

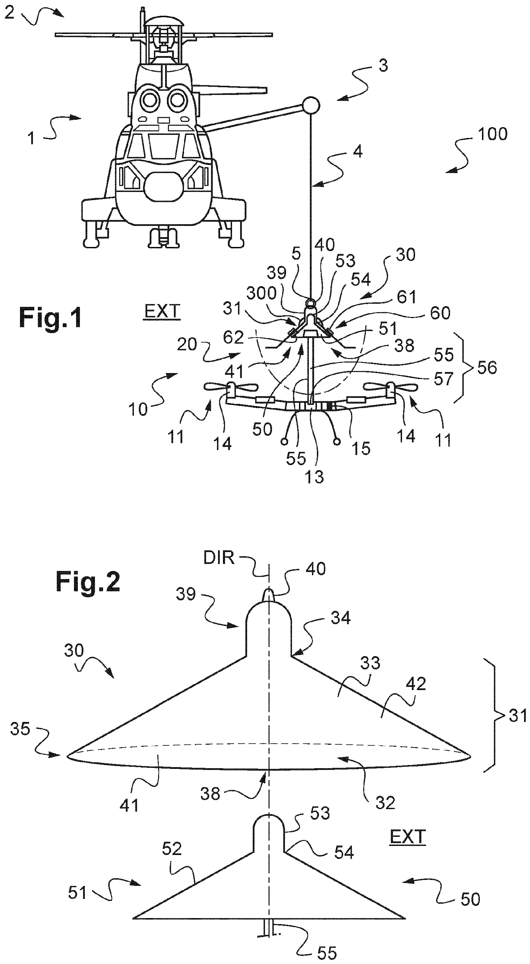

La figure 1 présente un système de récupération 20 selon l'invention. En particulier, la figure 1 illustre un ensemble 100 comprenant un aéronef porteur 1 et un aéronef à porter 10 coopérant avec un tel système de récupération 20.

Par exemple, l'aéronef porteur 1 comprend une voilure tournante 2. La figure 1 illustre ainsi un hélicoptère mais l'aéronef porteur 1 pourrait être d'un autre type. Par exemple, l'aéronef 1 pourrait aussi être un avion, un giravion...

L'aéronef à porter 10 illustré est un drone, à savoir un aéronef sans pilote humain embarqué. Ce drone comporte par exemple un ou plusieurs rotors 11 mis en rotation par des moteurs 14. Les moteurs 14 peuvent être de tous types et notamment des moteurs électriques reliés à une source électrique 15 de l'aéronef à porter 10. Par exemple, cette source électrique 15 comprend au moins une pile, au moins une batterie, au moins un générateur électrique... Un système de pilotage comprenant un pilote automatique embarqué 13 et/ou des organes commandés à distance peut par exemple contrôler les moteurs 14 pour piloter l'aéronef à porter 10 de manière usuelle.

Le système de récupération 20 permet à l'aéronef porteur 1 de saisir en vol l'aéronef à porter 10 et/ou de le larguer en vol. L'aéronef à porter 10 et le système de récupération 20 sont éventuellement grossis sur la figure 1 relativement à l'aéronef porteur 1.

Pour remplir sa fonction, le système de récupération 20 comporte un premier sous-ensemble dénommé par commodité « récepteur 30 » qui est destiné à être attaché à l'aéronef porteur 1. A cet effet, le récepteur 30 peut comprendre une fixation dite « fixation de réception 40 » par commodité pour être attaché à l'aéronef porteur 1. Selon l'exemple de la figure 1, l'aéronef porteur 1 peut comprendre un treuil 3 portant un câble 4 de treuil. Le récepteur 30 peut alors être fixé au câble 4 de treuil. De manière illustrative, la fixation de réception 40 peut posséder un anneau ou un équivalent attaché à un crochet 5 du câble 4 de treuil. Le treuil 3 permet alors de rapprocher ou d'éloigner le récepteur 30 de la cellule de l'aéronef porteur 1. Favorablement, ce câble 4 peut avoir en dehors du treuil 3 une longueur d'extension relativement importante afin que les évolutions de l'aéronef à porter 10 soient peu perturbées par le flux d'air traversant la voilure tournante 2.

Le récepteur 30 peut en outre comprendre une ou plusieurs poignées 300 pour qu'un opérateur puisse s'en saisir plus facilement.

Par ailleurs, le système de récupération 20 comporte un deuxième sous-ensemble dénommé par commodité « accrocheur 50 » destiné à être solidarisé à l'aéronef à porter 10. L'accrocheur 50 peut être prolongé en élévation par un mât 55 fixé à l'aéronef à porter 10 par un organe de fixation 57 usuel. Par exemple, le mât 55 est vissé à un support de l'aéronef à porter 10 afin d'être solidaire de cet aéronef à porter 10. Eventuellement, le mât 55 est dimensionné pour présenter un segment 56 éloignant l'aéronef à porter 10 du récepteur 30. Un tel segment 56 s'étend au moins partiellement en dehors du récepteur 30.

Par suite, le système de récupération 20 comprend un dispositif de fixation 60 ayant notamment pour fonction de fixer de manière réversible l'accrocheur 50 au récepteur 30. Le dispositif de fixation 60 peut être commandé par un opérateur humain à distance et/ou peut être commandé automatiquement via divers capteurs et équivalents. Par exemple, le dispositif de fixation 60 peut attacher l'accrocheur 50 au récepteur 30 lorsque l'accrocheur 50 se trouve à proximité du récepteur 30, à savoir dans une enveloppe prédéterminée de positions par rapport au récepteur 30. Ainsi, l'aéronef à porter 10 est piloté pour approcher l'accrocheur 50 du récepteur 30 puis le dispositif de fixation 60 arrime l'accrocheur 50 au récepteur 30 lorsque l'accrocheur 50 se trouve dans une position adéquate par rapport au récepteur 30. L'aéronef à porter 10 est ainsi porté par l'aéronef porteur 1 via l'accrocheur 50 et le récepteur 30. Cette opération est réversible, le récepteur 30 pouvant relâcher l'accrocheur 50 en l'état ou éventuellement après une opération réalisée par un operateur, un actionneur voire l'aéronef à porter 10.

Pour accueillir l'accrocheur 50 en son sein et en référence à l'exemple de réalisation de la figure 2, le récepteur 30 comporte un volume interne 38 vide en communication fluidique avec un milieu extérieur EXT au moins par une surface de passage 41. Dès lors, l'accrocheur 50 peut pénétrer dans le volume interne 38 par cette surface de passage 41. L'accrocheur 50 peut en outre présenter un volume apte à être inscrit dans le volume interne 38 de multiples manières.

Pour permettre le positionnement adéquat de l'accrocheur 50 dans le récepteur 30, le récepteur 30 comporte un tronçon de guidage 31 évasé délimitant au moins partiellement le volume interne 38. Ce tronçon de guidage 31 comporte une paroi 42 munie d'une face interne 32 délimitant au moins partiellement le volume interne 38 et une face externe 33 en contact avec le milieu extérieur EXT.

Par exemple, le tronçon de guidage 31 évasé a une forme s'étendant d'un sommet de réception 34 annulaire vers une base de réception 35 annulaire selon une direction en élévation DIR, le sommet ayant un rayon inférieur à un rayon de la base. La base de réception 35 peut être prolongée par un autre tronçon débouchant sur la surface de passage 41 ou peut déboucher sur cette surface de passage 41 selon l'exemple de la figure 2.

Selon un autre aspect, le tronçon de guidage 31 peut avoir une forme conique ou tronconique et/ou, dans un exemple qui n'entre pas dans le champ d'application des revendications annexées, peut présenter une symétrie de révolution autour de la direction en élévation DIR.

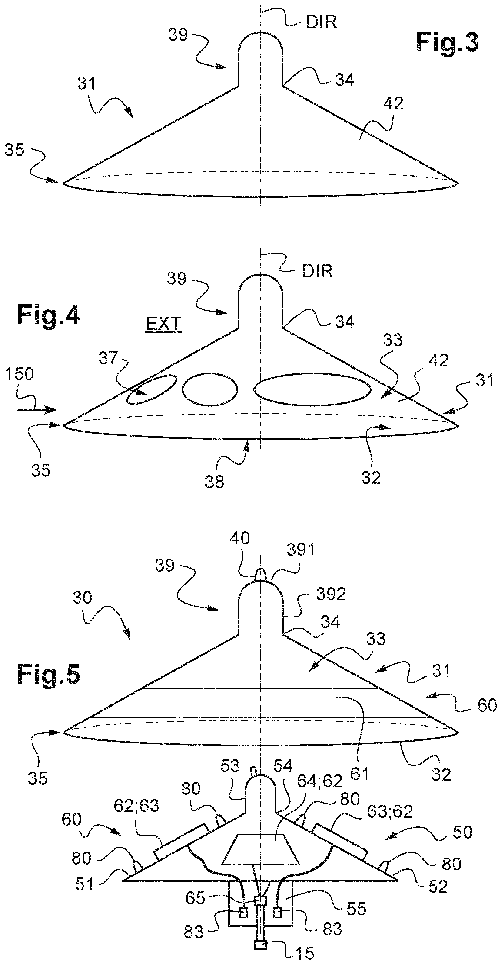

A l'inverse et selon la figure 3, le tronçon de guidage 31 est asymétrique.

Indépendamment de sa forme et en référence à la figure 4, le récepteur 30 peut comporter au moins un orifice 37 mettant en communication fluidique le milieu extérieur EXT et le volume interne 38, notamment selon une direction 150 orthogonale à la direction en élévation DIR. Par exemple, la paroi 42 du tronçon de guidage peut comprendre un ou plusieurs orifices 37 traversant de part en part cette paroi 42 de la face interne 32 à sa face externe 33.

Selon un autre aspect et en référence à la figure 5, le récepteur 30 peut comporter une portion de centrage 39 formant un organe de centrage. La portion de centrage 39 peut prolonger le tronçon de guidage 31 en élévation selon la direction en élévation DIR. La portion de centrage 39 peut être solidaire du sommet de réception 34 du tronçon de guidage 31 ou d'un organe intermédiaire interposé entre le sommet de réception 34 et la portion de centrage 39. Le sommet de réception 34 peut former une portion de centrage 39. La portion de centrage 39 peut présenter une symétrie de révolution par rapport à la direction en élévation DIR.

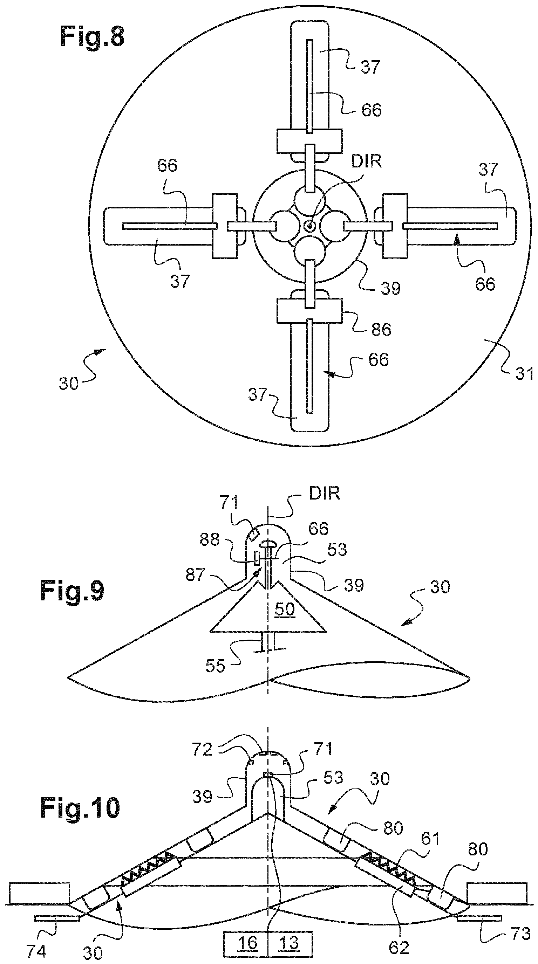

Selon la figure 5, la portion de centrage 39 peut comprendre une cloche. La cloche peut comprendre un fond 391 et un cylindre creux 392, le fond 391 obturant une extrémité du cylindre 392. La figure 8 illustre un simple anneau.

En référence à nouveau à la figure 5, la portion de centrage 39 peut être solidaire de la fixation de réception 40. Alternativement, la fixation de réception 40 peut être fixée à un autre organe du récepteur 30, et par exemple au tronçon de guidage 31 ou à un bâti portant le tronçon de guidage 31.

Indépendamment de la forme du récepteur 30, l'accrocheur 50 peut comporter un tronçon de connexion 51 évasé. Ce tronçon de connexion 51 évasé peut éventuellement être contenu au moins partiellement dans le volume interne 38.

Le tronçon de connexion 51 évasé comporte une cloison munie d'une face de contact 52 évasée susceptible d'être en regard de la face interne 32. La face de contact 52 peut avoir une forme conique ou tronconique.

Eventuellement, l'accrocheur 50 peut comporter un doigt de centrage 53. Le doigt de centrage 53 peut être de forme complémentaire à la portion de centrage 39 du récepteur 30. En outre, le doigt de centrage 53 peut être solidarisé au tronçon de connexion 51 directement ou indirectement via au moins une pièce intermédiaire.

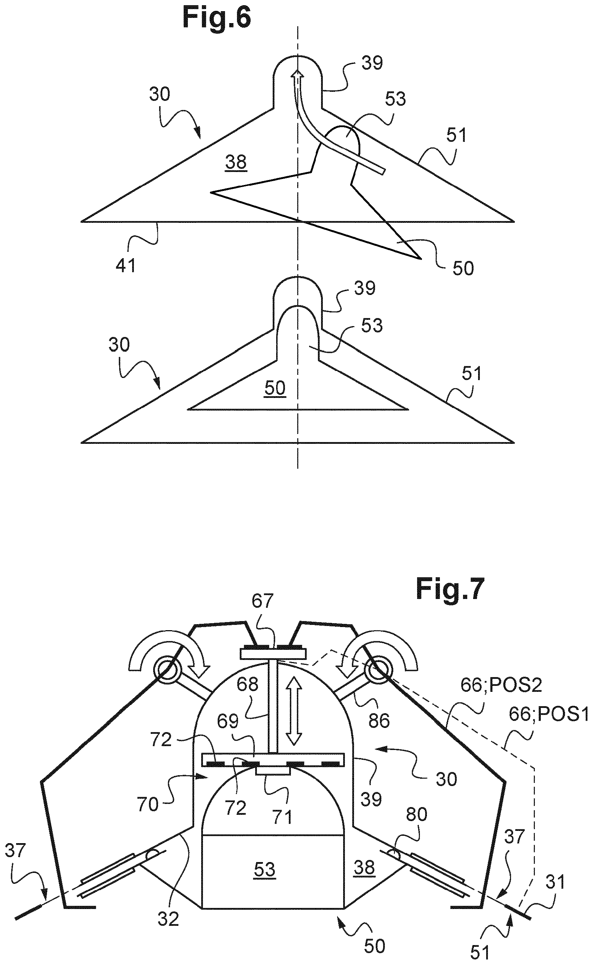

Selon la figure 6, l'accrocheur 50 peut alors pénétrer dans le volume interne 38 par la surface de passage 41. En raison notamment des formes évasées, l'accrocheur 50 et par exemple son tronçon de connexion 51 peut glisser le long du tronçon de guidage 31 jusqu'à ce que le doigt de centrage 53 soit inséré dans la portion de centrage 39 et/ou traverse la portion de centrage 39. L'accrocheur 50 est alors correctement positionné dans le récepteur 30.

Indépendamment de la forme du récepteur 30 et de l'accrocheur 50 et en référence à nouveau à la figue 5, l'accrocheur 50 et/ou le récepteur 30 peuvent comporter au moins un organe antichoc 80 dénommé organe tampon par commodité. Selon l'exemple illustré des blocs en matière élastique sont solidarisés à la face de contact 52 de l'accrocheur 50. De manière complémentaire ou alternative, des blocs en matière élastique peuvent être solidarisés à la face interne 32 du récepteur 30.

Selon un autre aspect, le système de récupération 20 peut comprendre un dispositif de fixation 60 permettant de fixer de manière réversible l'accrocheur 50 au récepteur 30 et de le larguer le cas échéant.

Le dispositif de fixation 60 peut comporter un sous-ensemble électrique muni d'une zone d'aimantation 61 solidaire du récepteur 30 ou de l'accrocheur 50. La zone d'aimantation 61 coopère avec des aimants réversibles 62 de l'accrocheur 50 ou du récepteur 30 dépourvu de la zone d'aimantation 61.

Selon la figure 5, le dispositif de fixation 60 peut comporter au moins une zone d'aimantation 61 du récepteur 30. Par exemple, le tronçon de guidage 31 comporte deux couronnes non métalliques tronconiques disposées selon la direction en élévation DIR au dessus et en dessous d'une couronne métallique tronconique formant la zone d'aimantation 61.

Pour obtenir une fixation magnétique, l'accrocheur 50 possède alors au moins un aimant réversible 62 configuré pour être aimanté à ladite au moins une zone d'aimantation 61 du récepteur 30. L'expression « aimant réversible » désigne un organe pouvant être aimanté temporairement et à la demande à la zone d'aimantation. Par exemple, un aimant réversible 62 comporte au moins un électroaimant alimenté électriquement si besoin.

Ainsi, pour solidariser un aéronef à porter 10 à l'aéronef porteur 1 par le biais du récepteur 30 et de l'accrocheur 50, on aimante l'accrocheur 50 au récepteur 30. A l'inverse, pour larguer l'aéronef à porter 10 on inhibe les aimants réversibles 62.

Eventuellement, l'accrocheur 50 comporte au moins un aimant réversible dit « aimant normalement fermé 63 », et par exemple au moins deux aimants normalement fermés 63 équirépartis en azimut au regard de la direction en élévation DIR selon la figure 5. De plus, l'accrocheur 50 peut comporter au moins un aimant réversible dit « aimant normalement ouvert 64 » et par exemple au moins deux aimants normalement ouverts 64 équirépartis en azimut au regard de la direction en élévation DIR selon la figure 5.

Chaque aimant normalement ouvert 64 est aimantable à la zone d'aimantation hors cas de panne électrique de l'accrocheur et l'aéronef à porter selon cette réalisation. Par exemple, chaque aimant normalement ouvert 64 est en communication avec un calculateur de positionnement 16 et/ou peut être électriquement relié à une source d'énergie électrique. Selon l'exemple illustré, la source électrique 15 de l'aéronef à porter représente la source d'énergie d'électrique aimantant les aimants réversibles 62.

Le calculateur de positionnement 16 peut alors transmettre aux aimants normalement ouverts 64 un signal modifiant l'orientation du champ magnétique émis par chaque aimant normalement ouvert 64.

Chaque aimant normalement fermé 63 est relié à un module 83 électriquement autonome pour être aimantable en cas de détection d'une dite panne électrique, aucun aimant normalement ouvert 64 ne coopérant pas avec ledit module

En outre, le système de récupération 20 peut comporter au moins un interrupteur 65 entre ladite source d'énergie électrique 15 et chaque aimant normalement ouvert 64. Un interrupteur 65 peut aussi être interposé par exemple entre le module 83 et chaque aimant normalement fermé 63. Chaque interrupteur 65 peut être contrôlé par un pilote humain à distance ou encore par un système automatique par exemple en fonction de la position de l'aéronef à porter 10 par rapport à l'aéronef porteur 1.

De manière complémentaire ou alternative et en référence à la figure 7, le dispositif de fixation 60 peut comprendre un sous-ensemble au moins partiellement mécanique.

Dès lors, le dispositif de fixation 60 peut comporter au moins un doigt de blocage 66 mobile par rapport au tronçon de guidage 31. Selon l'exemple de la figure 8, quatre doigts de blocage 66 sont portés par le récepteur 30 et équirépartis en azimut autour de la direction en élévation DIR.

En référence à nouveau à la figure 7, chaque doigt de blocage 66 peut être articulé à un soutien 86 du récepteur 30 par une liaison pivot. Un tel soutien 86 peut être solidaire de la portion de centrage 39 ou encore du tronçon de guidage 31 par exemple. A titre illustratif, le soutien 86 peut prendre la forme d'un bras. Chaque doigt de blocage 66 peut ainsi effectuer une rotation entre une position libre POS1 illustrée en pointillés et une position de blocage POS2. Dans la position libre POS1, aucun doigt de blocage 66 ne bloque l'accrocheur 50. Par contre, dans la position de blocage POS2, l'accrocheur 50 est maintenu selon la réalisation de la figure 7 entre chaque doigt de blocage 66 et une face interne 32 du récepteur 30. Pour passer chaque doigt de blocage 66 dans sa position de blocage POS2, le récepteur 30 peut comprendre un orifice 37 par doigt de blocage 66, chaque doigt de blocage 66 traversant un tel orifice 37 pour pénétrer dans le volume interne 38 dans lequel est logé l'accrocheur 50.

Chaque doigt de blocage 66 peut être commandé par un moteur par exemple. Néanmoins, selon l'exemple de la figure 7, chaque doigt de blocage 66 est commandé mécaniquement par l'accrocheur 50.

Ainsi, chaque doigt de blocage 66 est relié à un piston 67, une palette du doigt de blocage 66 reposant sur le piston 67 par exemple. Ce piston 67 est solidaire d'une tige 68 fixée à une plaque 69 présente dans le volume interne, et par exemple dans la portion de centrage 39. Dès lors, lorsque l'accrocheur 50 s'enfonce dans le récepteur 30, l'accrocheur 50 et selon l'exemple le doigt de centrage 53 poussent la plaque 69. Il en résulte une translation du piston 67 qui induit la rotation de chaque doigt de blocage 66 vers sa position de blocage POS2. Les doigts de blocage 66 bloquent alors l'accrocheur par arc-boutement.

Pour larguer l'aéronef à porter 10 selon cet exemple, les aimants réversibles 62 peuvent être inhibés. De plus, l'aéronef à porter 10 peut être mis en mouvement afin d'être légèrement poussé vers le haut, à savoir vers le piston 67 pour « dé-arcbouter » et libérer les doigts de blocage 66. Un actionneur peut aussi agir sur les doigts de blocage 66 à cet effet.

Selon la figure 9, un doigt de blocage 66 peut prendre la forme d'un crochet mobile en rotation et actionné par un moteur 88. Dans la position de blocage POS2, le crochet peut être inséré dans une gorge 87 et notamment sous une butée de l'accrocheur 50 et notamment du doigt de centrage 53 selon l'exemple illustré. Eventuellement, la portion de centrage annulaire illustrée sur la figure 9 peut être remplacée par une cloche.

Selon un autre aspect et en référence par exemple à la figure 7, le système de récupération 20 peut comporter au moins un dispositif de positionnement 70 pour aider à piloter le drone voire pour éventuellement commander un dispositif de fixation 60. Un tel dispositif de positionnement 70 génère un signal qui varie en fonction d'une position relative de l'accrocheur 50 par rapport au récepteur 30. Un tel signal peut être un signal numérique, analogique, vidéo...

Selon l'exemple illustré de la figure 9, le dispositif de positionnement 70 comporte un système optique muni d'une caméra 71 portée par le récepteur 30.

Selon l'exemple illustré de la figure 10, le dispositif de positionnement 70 comporte un système optique muni d'une caméra 71 portée par l'accrocheur 50. La caméra est éventuellement portée par le tronçon de connexion 51 ou encore le doigt de centrage 53. Selon la figure 10, la caméra est positionnée au sommet du doigt de centrage 53.

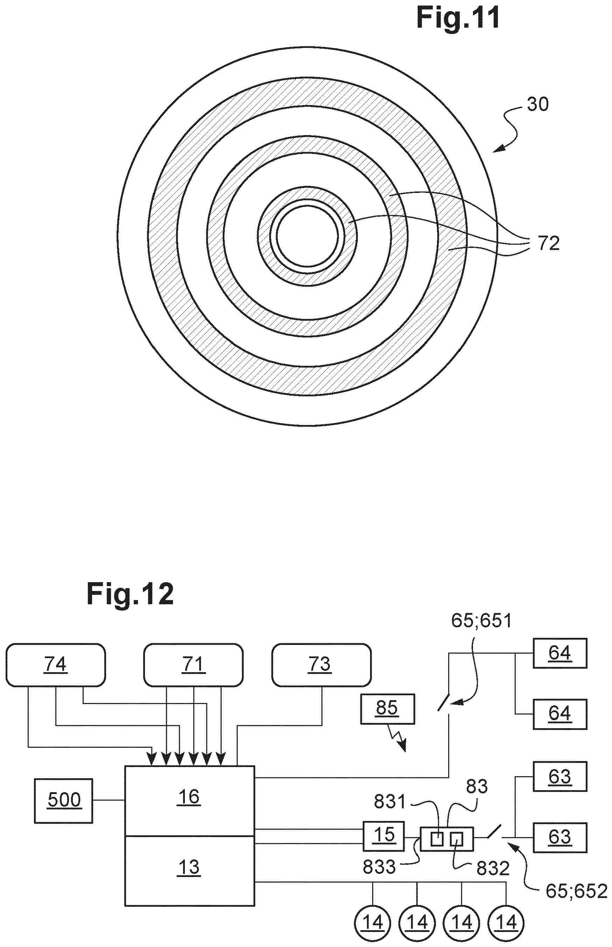

Le système optique peut inclure au moins une cible 72 portée par le récepteur 30. Selon la figure 11, trois cibles de type cercle 72 sont disposées sur le récepteur 30. Selon la figure 9, les symboles géométriques sont par exemples localisés sur la portion de centrage 39. En présence d'un dispositif de fixation 60 selon la figure 7, les symboles peuvent être disposés sur la plaque 69.

De plus et en référence à la figure 10, le système optique inclut un calculateur de positionnement 16 qui génère un signal en fonction de la forme des cibles 72 visualisée par la caméra 71. A cet effet, le calculateur de positionnement 16 met en oeuvre un algorithme de traitement d'images usuel. Le calculateur de positionnement 16 peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur... Le calculateur de positionnement 16 peut être localisé dans l'aéronef à porter 10 par exemple. Le calculateur de positionnement 16 peut être un calculateur indépendant et ou faire partie d'une unité de calcul intégrant au moins un autre calculateur et par exemple un calculateur de pilotage automatique 13.

De manière complémentaire ou alternative le dispositif de positionnement 70 peut comporter au moins un capteur de proximité 73. Par exemple, un capteur de proximité peut comprendre un capteur à effet hall, un bouton poussoir ou encore un système de positionnement par ultrasons 74 usuel... A titre illustratif, un système de positionnement par ultrasons 74 peut comprendre des émetteurs 742 à ultrasons disposés sur le récepteur 30, et par exemple à l'extrémité du tronçon de guidage conique selon la figure 10, et des capteurs 741 d'ultrasons disposés sur l'accrocheur selon la figure 10 ou encore sur l'aéronef à porter qui coopèrent avec un calculateur de positionnement du drone. Un tel système de positionnement par ultrasons 74 peut permettre de diriger avec précision le drone vers le récepteur 30 à quelques dizaines de mètres.

Un système de positionnement du type décrit dans la demande de brevet Française déposée en France le 12 juillet 2018 sous le numéro 1800735 est envisageable.

Eventuellement, le dispositif de positionnement 70 est relié à au moins un interrupteur 65 pilotant au moins un aimant réversible.

La figure 12 illustre un exemple de réalisation d'un drone selon l'invention.

Selon cet exemple, un système de positionnement par ultrason et ou radio 74 et une caméra 71 communiquent avec un calculateur de positionnement 16. Ce calculateur de positionnement 16 traite les données obtenues pour déterminer la position de l'accrocheur 50 par rapport au récepteur 30 par exemple vie un filtre de Kalman. Le calculateur de positionnement 16 est relié à chaque interrupteur 65 pour lui transmettre un ordre afin d'aimanter l'accrocheur 50 au récepteur 30 lorsque l'accrocheur 50 est dans une enveloppe de positions prédéterminées. Eventuellement, un capteur de position peut aussi être relié à chaque interrupteur 65 sans passer par le calculateur de positionnement 16. Cette architecture possède alors deux moyens dissimilaires pour commander chaque interrupteur 65 ce qui optimise la sécurité. De manière complémentaire ou alternative, chaque interrupteur 65 peut aussi être en communication avec une commande 85 déportée manoeuvrable par un opérateur humain.

Selon l'exemple illustré, un premier interrupteur 651 permet d'inhiber sur requête les aimants normalement ouverts 64 en étant agencé entre le calculateur de positionnement 16 et ces aimants normalement ouverts 64. Un deuxième interrupteur 652 permet d'inhiber sur requête les aimants normalement fermés 63 en étant agencé entre le module 83 et ces aimants normalement fermés 63.

Le calculateur de positionnement 16 peut aussi communiquer avec un calculateur de pilotage automatique 13 qui pilote des moteurs 14 ou d'autres types de moyens de pilotage pour déplacer l'aéronef à porter 10 dans l'atmosphère.

Selon l'exemple illustré chaque aimant normalement ouvert 64 est alors commandé par le calculateur de pilotage 16. Le calculateur de pilotage peut envoyer un signal à chaque aimant normalement ouvert 64 pour changer l'orientation de son champ magnétique ou créer un champ magnétique.

Par ailleurs, chaque aimant normalement fermé 63 est lui relié à un module 83. Un tel module peut comprendre un calculateur 831 ou équivalent et une source électrique 832. De plus, le module 83 peut comprendre un analyseur 833 usuel pour détecter si le module 83 reçoit un signal électrique. Dans la négative, le module 83 transmet un signal à chaque aimant normalement fermé 63 pour le rendre aimantable.

De manière complémentaire ou alternative le dispositif de positionnement 70 peut comporter un système de positionnement par satellites 500 solidaire de l'aéronef à porter et par exemple relié au calculateur de positionnement 16 et/ou au calculateur de pilotage automatique 13. Ce système de positionnement par satellites 500 solidaire de l'aéronef à porter peut coopérer avec un système de positionnement par satellites de l'aéronef porteur et/ou du récepteur pour positionner précisément l'accrocheur par rapport au récepteur via une mesure différentielle entre le système de positionnement par satellites 500 solidaire de l'aéronef à porter et le système de positionnement par satellites de l'aéronef porteur et/ou du récepteur.

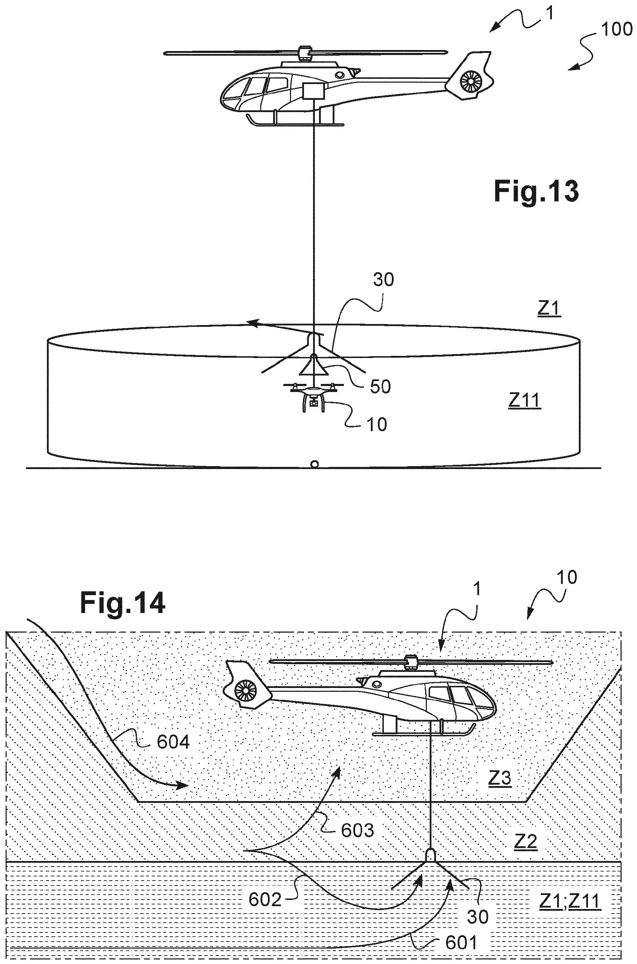

Les figures 13 et 14 illustrent une procédure de récupération d'un aéronef à porter 10 de type drone 10 avec un aéronef porteur 1 de type hélicoptère.

Selon la figure 13, l'aéronef à porter 10 peut être autorisé à voler dans une zone restreinte Z11. Selon un exemple, une telle zone restreinte Z11 peut présenter la forme d'un cylindre d'une hauteur de 40 mètres et d'un rayon de 100 mètres. Les dimensions d'une zone restreinte peuvent être modifiables.

Dès lors l'aéronef porteur 1 peut être manoeuvré pour positionner le récepteur 30 dans cette zone restreinte Z11, par exemple au sommet de cette zone restreinte Z11 et sensiblement sur son axe de symétrie de révolution.

Selon la figure 14, l'espace entourant voire présent sous l'aéronef porteur peut être découpé en trois zones Z1, Z2, Z3 comprenant une zone sécurisée Z1 dans laquelle se trouve la zone restreinte Z11, une zone intermédiaire Z2 et une zone de danger Z3. La zone de danger Z3 contient l'aéronef porteur, la zone intermédiaire Z2 étant disposée entre la zone de danger Z3 et la zone sécurisée Z1.

Dans des conditions normales, l'aéronef à porter 10 évolue dans la zone sécurisé Z1 pour rejoindre le récepteur 30.

Selon un exemple l'aéronef à porter peut être muni d'un système de positionnement comportant notamment un système de positionnement par satellites 500 et un système à ultrasons 74. Dès lors, le calculateur de pilotage peut solliciter le système de positionnement par satellites 500 pour diriger l'aéronef à porter vers le récepteur 30 tant que ce système de positionnement par satellites 500 est plus précis que le système à ultrasons 74 ou jusqu'à une certaine distance du récepteur. Dès lors, lorsque le système à ultrasons 74 devient efficace le pilotage est effectué dans un second temps en utilisant les données du système à ultrasons 74 puis le cas échéant avec le système à caméra 71 dans une phase finale.

Eventuellement, lorsque par exemple le système de positionnement détermine que l'aéronef à porter 10 se déplace effectivement dans la zone sécurisée Z1 selon la flèche 601, la mission de récupération se poursuit normalement.

Si l'aéronef à porter 1 évolue dans la zone intermédiaire Z2 par exemple suite à une rafale de vent, des ordres automatiques élaborées par une ou plusieurs lois mémorisées du calculateur de pilotage et/ou donnés par un opérateur sont générés et transmis aux organes de pilotage du drone pour le faire retourner selon la flèche 602 dans la zone sécurisée Z1. Par exemple, un nouveau point de passage localisé sur le sol est généré pour forcer le drone à retourner dans la zone sécurisée Z1.

Toutefois, si l'aéronef porteur 1 évolue dans la zone de danger Z3 selon les flèches 603, 604 alors des ordres automatiques fournis par le calculateur de pilotage et/ou donnés par un opérateur sont générés pour mettre un terme à la mission par exemple en détruisant le drone par sécurité. Eventuellement, un tel ordre peut prendre la forme d'un signal ordonnant la coupure des moteurs du drone. Un signal peut être transmis à un système de parachute pour déployer au moins un parachute, ce parachute pouvant par exemple être contrôlé selon l'enseignement de la demande de brevet FR 3074144.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications.

Bien que non représenté, il est par exemple concevable de prévoir un récepteur dépourvu d'une portion de centrage et de fait un accrocheur dépourvu du doigt de centrage décrit.

De même, il est aussi concevable de prévoir un récepteur comportant uniquement une zone d'aimantation et non pas des doigts de blocage ou uniquement au moins un doigt de blocage.

En outre, il est aussi concevable d'agencer une zone d'aimantation sur l'accrocheur et des aimants réversibles sur le récepteur. Selon une autre possibilité l'accrocheur et le récepteur possèdent chacun une zone d'aimantation et des aimants réversibles.

## Revendications

1. Système de récupération (20) pour au moins récupérer en vol un aéronef à porter (10) à partir d'un aéronef porteur (1), le système de récupération (20) comprenant un récepteur (30) apte à être porté par l'aéronef porteur (1) et un accrocheur (50) apte à être porté par l'aéronef à porter (10), ledit récepteur (30) présentant un volume interne (38) débouchant sur un milieu extérieur (EXT) par une surface de passage (41), ledit récepteur (30) comportant un tronçon de guidage (31) creux, ledit tronçon de guidage (31) étant évasé, ledit accrocheur (50) comportant un tronçon de connexion (51) évasé apte à être contenu au moins partiellement dans ledit volume interne (38), ledit système de récupération (20) comprenant un dispositif de fixation (60) fixant de manière réversible l'accrocheur (50) au récepteur (30)
**caractérisé en ce que** ledit accrocheur (50) est solidaire d'un mât (55) configuré pour être attaché à l'aéronef à porter (10), ledit mât (55) comprenant un segment (56) agencé en dehors dudit récepteur (30) lorsque ledit accrocheur (50) est arrimé au récepteur (30), ledit tronçon de guidage (31) étant asymétrique.

2. Système selon la revendication 1,
**caractérisé en ce que** ledit récepteur (30) comporte au moins un orifice (37) traversant de part en part une paroi (42) de ce récepteur (30), ledit au moins un orifice (37) mettant en communication fluidique ledit milieu extérieur (EXT) et ledit volume interne (38).

3. Système selon l'une quelconque des revendications 1 à 2,
**caractérisé en ce que** ledit récepteur (30) comporte une portion de centrage (39) solidaire d'un sommet de réception (34) dudit tronçon de guidage (31), ledit accrocheur (50) comportant un doigt de centrage (53), le doigt de centrage (53) étant configuré pour pénétrer dans ladite portion de centrage (39).

4. Système selon l'une quelconque des revendications 1 à 3,
**caractérisé en ce qu'**au moins ledit accrocheur (50) ou ledit récepteur (30) comporte au moins un organe tampon (80) configuré pour limiter les conséquences d'un contact entre l'accrocheur (50) et le récepteur (30).

5. Système selon l'une quelconque des revendications 1 à 4,
**caractérisé en ce que** ledit dispositif de fixation (60) comporte au moins une zone d'aimantation (61) solidaire de l'accrocheur (50) ou du récepteur (30), ledit dispositif de fixation (60) ayant au moins un aimant réversible (62) solidaire de l'accrocheur (50) ou du récepteur (30) dépourvu de la zone d'aimantation et apte à être aimanté ou non aimanté à ladite au moins une zone d'aimantation (61) sur commande.

6. Système selon la revendication 5,
**caractérisé en ce que** ledit au moins un aimant réversible (62) comporte au moins un aimant normalement ouvert (64) qui est aimantable à la zone d'aimantation hors cas de panne électrique, ledit au moins un aimant réversible (62) comportant au moins un aimant normalement fermé (63) qui est aimantable à la zone d'aimantation par un module électriquement autonome en cas de détection d'une dite panne électrique, ledit au moins un aimant normalement ouvert (64) ne coopérant pas avec ledit module.

7. Système selon la revendication 6,
**caractérisé en ce que** ledit système de récupération (20) comporte au moins un interrupteur (65) pour inhiber au moins ledit au moins un aimant normalement fermé (63) ou ledit au moins un aimant normalement ouvert (64).

8. Système selon l'une quelconque des revendications 1 à 7,
**caractérisé en ce que** ledit système de récupération (20) comporte au moins un dispositif de positionnement (70) générant un signal qui varie en fonction d'une position relative dudit accrocheur (50) par rapport au récepteur (30).

9. Système selon la revendication 8,
**caractérisé en ce que** ledit dispositif de positionnement (70) comporte une caméra (71) portée par l'accrocheur (50) ainsi qu'un calculateur de positionnement (16) relié à ladite caméra (71) et au moins une cible (72) portée par le récepteur (30).

10. Système selon l'une quelconque des revendications 8 à 9,
**caractérisé en ce que** ledit dispositif de positionnement (70) comporte un capteur de proximité (73, 74).

11. Système selon l'une quelconque des revendications 8 à 10 et la revendication 8,
**caractérisé en ce que** ledit dispositif de positionnement (70) est relié à l'interrupteur (65).

12. Système selon l'une quelconque des revendications 1 à 11,
**caractérisé en ce que** ledit dispositif de fixation (60) comporte au moins un doigt de blocage (66) mobile par rapport au tronçon de guidage (31), ledit doigt de blocage (66) étant mobile entre une position libre (POS1) dans laquelle le doigt de blocage (66) n'entrave pas l'accrocheur (50) et une position de blocage (POS2) dans laquelle ledit accrocheur (50) est maintenu au moins par le doigt de blocage (66).

13. Système selon la revendication 12,
**caractérisé en ce que** ledit doigt de blocage (66) est commandé mécaniquement par l'accrocheur (50) au moins pour passer de la position libre (POS1) à la position de blocage (POS2), ledit doigt de blocage (66) étant relié à un piston (67) mobile en translation pour qu'une translation du piston (67) induite par l'accrocheur (50) engendre une rotation du doigt de blocage (66).

14. Ensemble (100) muni d'un aéronef porteur (1) et d'un aéronef à porter (10),
**caractérisé en ce que** ledit ensemble (100) comporte un système de récupération (20) selon l'une quelconque des revendications 1 à 13, ledit récepteur (30) étant accroché à l'aéronef porteur (1) et ledit accrocheur (50) étant accroché à l'aéronef à porter (10).

## Patentansprüche

1. Bergungssystem (20), um zumindest im Flug ein zu tragendes Luftfahrzeug (10) von einem Trägerluftfahrzeug (1) aus zu bergen, wobei das Bergungssystem (20) einen Aufnehmer (30), der geeignet ist, von dem Trägerluftfahrzeug (1) getragen zu werden, und einen Aufhänger (50) umfasst, der geeignet ist, von dem zu tragenden Luftfahrzeug (10) getragen zu werden, wobei der Aufnehmer (30) ein Innenvolumen (38) aufweist, das über eine Durchgangsfläche (41) in ein Außenmedium (EXT) mündet, der Aufnehmer (30) einen hohlen Führungsabschnitt (31) aufweist, wobei der Führungsabschnitt (31) aufgeweitet ist, der Aufhänger (50) einen aufgeweiteten Verbindungsabschnitt (51) aufweist, der geeignet ist, zumindest teilweise in dem Innenvolumen (38) enthalten zu sein, wobei das Bergungssystem (20) eine Befestigungsvorrichtung (60) umfasst, die den Aufhänger (50) reversibel am Aufnehmer (30) befestigt,
**dadurch gekennzeichnet, dass** der Aufhänger (50) fest mit einem Mast (55) verbunden ist, der konfiguriert ist, um an dem zu tragenden Luftfahrzeug (10) befestigt zu werden, wobei der Mast (55) ein Segment (56) umfasst, das außerhalb des Aufnehmers (30) angeordnet ist, wenn der Aufhänger (50) an den Aufnehmer (30) angedockt ist, wobei der Führungsabschnitt (31) asymmetrisch ist.

2. System nach Anspruch 1,
**dadurch gekennzeichnet, dass** der Aufnehmer (30) mindestens eine Öffnung (37) aufweist, die eine Wand (42) dieses Aufnehmers (30) von einer Seite zur anderen durchquert, wobei die mindestens eine Öffnung (37) das Außenmedium (EXT) und das Innenvolumen (38) in Fluidverbindung bringt.

3. System nach einem der Ansprüche 1 bis 2,
**dadurch gekennzeichnet, dass** der Aufnehmer (30) einen Zentrierabschnitt (39) umfasst, der fest mit einer Aufnahmespitze (34) des Führungsabschnitts (31) verbunden ist, wobei der Aufhänger (50) einen Zentrierfinger (53) umfasst, und der Zentrierfinger (53) konfiguriert ist, um in den Zentrierabschnitt (39) einzudringen.

4. System nach einem der Ansprüche 1 bis 3,
**dadurch gekennzeichnet, dass** mindestens der Aufhänger (50) oder der Aufnehmer (30) mindestens ein Pufferelement (80) aufweist, das konfiguriert ist, um die Folgen eines Kontakts zwischen dem Aufhänger (50) und dem Aufnehmer (30) zu begrenzen.

5. System nach einem der Ansprüche 1 bis 4,
**dadurch gekennzeichnet, dass** die Befestigungsvorrichtung (60) mindestens eine Magnetisierungszone (61) aufweist, die fest mit dem Aufhänger (50) oder dem Aufnehmer (30) verbunden ist, wobei die Befestigungsvorrichtung (60) mindestens einen reversiblen Magneten (62) aufweist, der fest mit dem Aufhänger (50) oder dem Aufnehmer (30) verbunden ist, von der Magnetisierungszone frei ist und geeignet ist, auf Befehl an der mindestens einen Magnetisierungszone (61) magnetisiert oder entmagnetisiert zu werden.

6. System nach Anspruch 5,
**dadurch gekennzeichnet, dass** der mindestens eine reversible Magnet (62) mindestens einen normalerweise offenen Magneten (64) umfasst, der außer im Falle einer elektrischen Störung an der Magnetisierungszone magnetisierbar ist, wobei der mindestens eine reversible Magnet (62) mindestens einen normalerweise geschlossenen Magneten (63) umfasst, der im Falle der Erfassung einer besagten elektrischen Störung durch ein elektrisch autonomes Modul an der Magnetisierungszone magnetisierbar ist, wobei der mindestens eine normalerweise offene Magnet (64) nicht mit dem Modul zusammenwirkt.

7. System nach Anspruch 6,
**dadurch gekennzeichnet, dass** das Bergungssystem (20) mindestens einen Schalter (65) aufweist, um mindestens den mindestens einen normalerweise geschlossenen Magneten (63) oder den mindestens einen normalerweise offenen Magneten (64) zu hemmen.

8. System nach einem der Ansprüche 1 bis 7,
**dadurch gekennzeichnet, dass** das Bergungssystem (20) mindestens eine Positionierungsvorrichtung (70) umfasst, die ein Signal erzeugt, das sich in Abhängigkeit von einer relativen Position des Aufhängers (50) in Bezug auf den Aufnehmer (30) ändert.

9. System nach Anspruch 8,
**dadurch gekennzeichnet, dass** die Positionierungsvorrichtung (70) eine von dem Aufhänger (50) getragene Kamera (71) sowie einen mit der Kamera (71) und mindestens einem von dem Aufnehmer (30) getragenen Ziel (72) verbundenen Positionierungsrechner (16) umfasst.

10. System nach einem der Ansprüche 8 bis 9,
**dadurch gekennzeichnet, dass** die Positionierungsvorrichtung (70) einen Näherungssensor (73, 74) umfasst.

11. System nach einem der Ansprüche 8 bis 10 und nach Anspruch 8,
**dadurch gekennzeichnet, dass** die Positionierungsvorrichtung (70) mit dem Schalter (65) verbunden ist.

12. System nach einem der Ansprüche 1 bis 11, **dadurch gekennzeichnet, dass** die Befestigungsvorrichtung (60) mindestens einen Sperrfinger (66) aufweist, der in Bezug auf den Führungsabschnitt (31) beweglich ist, wobei der Sperrfinger (66) zwischen einer freien Position (POS1), in der der Sperrfinger (66) den Aufhänger (50) nicht behindert, und einer Sperrposition (POS2) beweglich ist, in der der Aufhänger (50) zumindest durch den Sperrfinger (66) gehalten ist.

13. System nach Anspruch 12,
**dadurch gekennzeichnet, dass** der Sperrfinger (66) mechanisch durch den Aufhänger (50) zumindest von der freien Position (POS1) in die Sperrposition (POS2) gesteuert wird, wobei der Sperrfinger (66) mit einem translatorisch beweglichen Kolben (67) verbunden ist, so dass eine durch den Aufhänger (50) induzierte Translation des Kolbens (67) eine Rotation des Sperrfingers (66) bewirkt.

14. Baugruppe (100) mit einem Trägerluftfahrzeug (1) und einem zu tragenden Luftfahrzeug (10),
**dadurch gekennzeichnet, dass** die Anordnung (100) ein Bergungssystem (20) nach einem der Ansprüche 1 bis 13 umfasst, wobei der Aufnehmer (30) an dem Trägerflugzeug (1) und der Aufhänger (50) an dem zu tragenden Luftfahrzeug (10) eingehängt ist.

## Claims

1. Recovery system (20) allowing a carrier aircraft (1) to at least recover a carrier-borne aircraft (10) in flight, the recovery system (20) comprising a receiver (30) able to be carried by the carrier aircraft (1) and an attachment (50) able to be carried by the carrier-borne aircraft (10), said receiver (30) having an internal volume (38) emerging into an external environment (EXT) via a through surface (41), said receiver (30) comprising a hollow guide section (31), said guide section (31) being flared, said attachment (50) comprising a flared connection section (51) able to be at least partially contained in said internal volume (38), said recovery system (20) comprising a fixing device (60) reversibly fixing the attachment (50) to the receiver (30),
**characterised in that** said attachment (50) is rigidly connected to a mast (55) configured to be attached to the carrier-borne aircraft (10), said mast (55) comprising a segment (56) arranged outside said receiver (30) when said attachment (50) is stowed in the receiver (30), said guide section (31) being asymmetrical.

2. System according to Claim 1,
**characterised in that** said receiver (30) comprises at least one orifice (37) fully passing through a wall (42) of this receiver (30), said at least one orifice (37) fluidly connecting said external environment (EXT) and said internal volume (38).

3. System according to any one of Claims 1 to 2,
**characterised in that** said receiver (30) comprises a centring portion (39) rigidly connected to a receiving vertex (34) of said guide section (31), said attachment (50) comprising a centring finger (53), the centring finger (53) being configured to penetrate said centring portion (39).

4. System according to any one of Claims 1 to 3,
**characterised in that** at least said attachment (50) or said receiver (30) comprises at least one buffer component (80) configured to limit the consequences of contact between the attachment (50) and the receiver (30).

5. System according to any one of Claims 1 to 4,
**characterised in that** said fixing device (60) comprises at least one magnetisation zone (61) rigidly connected to the attachment (50) or the receiver (30), said fixing device (60) having at least one reversible magnet (62), which is rigidly connected to the attachment (50) or the receiver (30) devoid of the magnetisation zone and which may or may not be magnetised with said at least one magnetisation zone (61) on command.

6. System according to Claim 5,
**characterised in that** said at least one reversible magnet (62) comprises at least one normally open magnet (64) that can be magnetised with the magnetisation zone except in the event of an electrical fault, said at least one reversible magnet (62) comprising at least one normally closed magnet (63) that can be magnetised with the magnetisation zone by an electrically autonomous module in the event of the detection of said electrical fault, said at least one normally open magnet (64) not cooperating with said module.

7. System according to Claim 6,
**characterised in that** said recovery system (20) comprises at least one switch (65) for inhibiting at least said at least one normally closed magnet (63) or said at least one normally open magnet (64).

8. System according to any one of Claims 1 to 7,
**characterised in that** said recovery system (20) comprises at least one positioning device (70) generating a signal that varies as a function of a relative position of said attachment (50) relative to the receiver (30).

9. System according to Claim 8,
**characterised in that** said positioning device (70) comprises a camera (71) borne by the attachment (50), as well as a positioning computer (16) connected to said camera (71), and at least one target (72) borne by the receiver (30).

10. System according to any one of Claims 8 to 9,
**characterised in that** said positioning device (70) comprises a proximity sensor (73, 74).

11. System according to any one of Claims 8 to 10 and Claim 8,
**characterised in that** said positioning device (70) is connected to the switch (65).

12. System according to any one of Claims 1 to 11,
**characterised in that** said fixing device (60) comprises at least one blocking finger (66) that is movable relative to the guide section (31), said blocking finger (66) being movable between a free position (POS1), in which the blocking finger (66) does not impede the attachment (50), and a blocking position (POS2), in which said attachment (50) is held at least by the blocking finger (66).

13. System according to Claim 12,
**characterised in that** said blocking finger (66) is mechanically controlled by the attachment (50) at least for transitioning from the free position (POS1) to the blocking position (POS2), said blocking finger (66) being connected to a translationally movable piston (67) so that a translation movement of the piston (67) induced by the attachment (50) causes a rotation of the blocking finger (66).

14. Assembly (100) provided with a carrier aircraft (1) and a carrier-borne aircraft (10),
**characterised in that** said assembly (100) comprises a recovery system (20) according to any one of Claims 1 to 13, said receiver (30) being attached to the carrier aircraft (1) and said attachment (50) being attached to the carrier-borne aircraft (10).
